# EUROPÄISCHE PATENTSCHRIFT

(11) **EP 2 505 302 B1**
(45) Veröffentlichungstag und Bekanntmachung des Hinweises auf die Patenterteilung: **08.01.2014**
(21) Anmeldenummer: 11160213.2
(22) Anmeldetag: 29.03.2011
(51) Int. Cl.: B23Q 1/76

(54) **Lünette**
Stationary support
Lunette

(43) Veröffentlichungstag der Anmeldung: 03.10.2012
(73) Patentinhaber: SMW-AUTOBLOK Spannsysteme GmbH, 88074 Meckenbeuren (DE)
(72) Erfinder: Maurer, Eckhard, 88094 Oberteuringen (DE); Marquart, Jürgen, 88677 Markdorf (DE)
(74) Vertreter: Engelhardt & Engelhardt

(56) Entgegenhaltungen:
- EP-A1- 0 554 506
- EP-A2- 1 302 275

## Beschreibung

Die Erfindung bezieht sich auf eine Lünette zur Zentrierung eines rotationssymmetrischen Werkstückes im Raum nach dem Oberbegriff des Patentanspruches 1.

Derartige Lünetten werden zur Abstützung von rotationssymmetrischen Werkstücken an Werkzeugmaschinen seit Jahrzehnten eingesetzt. Insbesondere bei schweren und langen rotationssymmetrischen Werkstücken ist es notwendig, diese im Raum zentrisch durch mehrere voneinander beabstandete Lünetten zu fixieren, um die Durchbiegung des Werkstückes auszugleichen. Die Werkstücke werden nämlich durch die Eigengewichtskraft durchgebogen, und zwar insbesondere wenn diese zur spanabhebenden Bearbeitung rotieren.

Mittels einer Vielzahl von Bearbeitungsschritten entstehen zudem zusätzliche Bearbeitungskräfte, die auf die Werkstücke einwirken und durch die die zentrische Positionierung des Werkstückes verändert werden könnten. Durch die bekannten Lünetten soll demnach verhindert sein, dass durch die Bearbeitungskräfte, die auf die Werkstücke einwirken, solche Positionsveränderungen eintreten.

Durch die spanabhebende Bearbeitung reduziert sich die Gewichtskraft der Werkstücke, wodurch oftmals ebenfalls eine Positionsveränderung stattfindet, so dass die Lünetten nach einer bestimmten Reduzierung der Gewichtskraft der Werkstücke erneut aufzumachen sind, um die Werkstücke derart im Raum zu positionieren, dass die Längsachse des eingespannten Werkstückes auf einer Geraden verläuft, ohne das von dieser Zentrumsachse eine Abweichung vorliegt.

Aus der EP 0 554 506 B1 ist eine Lünette mit einer internen Einstellungsvorrichtung für die Zentrumsachse der Werkstücke zu entnehmen. Es ist nämlich erforderlich, die beiden äußeren Lünettenarme unterschiedlich zueinander zu bewegen, um die vertikale Ausrichtung des Werkstückes zu erreichen. Die horizontale Zentrierung des Werkstückes erfolgt gemeinsam mit allen drei Lünettenarmen, die sowohl gleichzeitig oder zeitlich versetzt zueinander in Wirkkontakt mit dem Werkstück gelangen.

Durch die EP 0 554 506 B1 wird zur vertikalen und horizontalen Ausrichtung der Lünettenarme eine äußerst konstruktiv aufwendige Verstelleinrichtung vorgeschlagen.

Für eine solche Verstelleinrichtung hat sich als nachteilig herausgestellt, dass diese in ihrer Herstellung sehr teuer ist und dass die Bedienung und Funktionsweise der Einstellvorrichtung kompliziert ist und daher Fachpersonal benötigt wird, durch das mit entsprechender Erfahrungen die vertikale und horizontale Ausrichtung der Lünettenarme vorgenommen wird.

Aus der DE 60208835 T2 bzw. der EP 1 302 275 A2 ist eine vertikal verstellbare Lünette zu entnehmen, deren Lünettenarme zeitlich versetzte Anschlagpunkte auf der Kontaktfläche des Werkstückes mittels Wipp- und Gleitelemente aufweisen, die an den Gehäusehälften gelagert sind.

Durch die Gleit- und Wippelemente, die auch als Stößel bezeichnet sind, werden die Positionen der beiden äußeren Lünettenarme derart zueinander verstellt, dass die an den Lünettenarmen abstehenden Steuerbolzen gleichzeitig oder zeitlich versetzt zueinander an den Anlageflächen in Wirkkontakt gelangen und somit in Richtung des Werkstückes bewegt sind. Durch ein Verschieben der Gleitelemente quer zur Bewegungsrichtung des Mittelstückes und die an diesen angeformte schräge Fläche erfolgt die angesprochene Einstellung der Zustellabläufe der beiden äußeren Lünettenarme.

Dieser Stand der Technik hat sich zur Einstellung der Zustellbewegung der Lünettenarme zwar bewährt, jedoch sind zusätzliche Bauteile anzufertigen und Bohrungen in das Mittelstück bzw. das Gehäuse einzuarbeiten, in denen die Gleit- und Wippelemente verschiebbar gelagert sind. Die Fertigung solcher hochpräzisen Bauteile ist äußerst kostenaufwendig, denn die Gleit- und Wippelemente müssen identische schräg verlaufende Anlageflächen aufweisen. Wenn nämlich Fehlertolleranzen aufgrund von herstellungsbedingten Tolleranzabweichungen vorliegen, ist die Zustellung bzw. Einstellung der beiden äußeren Lünettenarme nicht möglich, denn es entsteht ein ungewolltes Verschieben des Werkstückes.

Es ist daher Aufgabe der Erfindung, eine Lünette der eingangs genannten Gattung zur Verfügung zu stellen, durch die gewährleistet ist, dass hohe Bearbeitungskräfte zuverlässig abgestützt sind, ohne dass die zentrische Positionierung des Werkstückes im Raum durch diese Kräfte verändert ist und dass gleichzeitig die Zentrierung des Werkstückes im Raum auf einfache und schnelle Art durch die Lageveränderung der Lünettenarme bzw. des Mittelstückes einstellbar ist, ohne dass hierfür komplexe Einstellschritte erforderlich sind.

Diese Aufgaben sind erfindungsgemäß durch die Merkmale des kennzeichnenden Teils von Patentanspruch 1 gelöst.

Weitere vorteilhafte Weiterbildungen der Erfindung ergeben sich aus den Unteransprüchen.

Dadurch, dass der Abstand zwischen den beiden Führungsleisten und dem Werkstück durch die erste Halbschale in einem bestimmten Grenzbereich variabel einstellbar ist, können die Zustellwege der drei Lünettenarme eingestellt werden, so dass die Position des Werkstückes im Raum in horizontaler Richtung bzw. in horizontaler Ebene derart ausgerichtet werden kann, dass die Längsachse des Werkstückes fluchtend zu der horizontalen Achse verläuft. Durch die Bewegung der zweiten Halbschale werden die Positionen der beiden Führungsleisten derart gegenläufig synchron zueinander verändert, dass die in die Steuerkurven der Lünettenarme eingreifenden Steuerbolzen unterschiedlich oder gleichzeitig auf die Steuerflächen der Steuerkurven auftreffen, so dass die beiden äußeren Lünettenarme exakt gleichzeitig oder zeitlich versetzt zueinander in Kontakt mit dem einzuspannenden Werkstück treten, wodurch erreicht ist, dass die vertikale Position des Werkstückes mittels der Bewegung der zweiten Halbschale quer zur Bewegungsrichtung des Mittelstückes einstellbar ist.

Es ist besonders vorteilhaft, in das Mittelstück parallel und beabstandet zu der Längsachse des Mittelstückes verlaufende Führungsbahnen einzuarbeiten, denn dadurch sind die äußeren Lünettenarme mittels der Führungsbolzen definiert positioniert, wenn nämlich die Steuerbolzen aus den Steuerkurven der Lünettenarme herausgeschoben sind, so dass die Position der äußeren Lünettenarme des Mittelstückes und der Führungsleisten permanent zueinander in der vorgegebenen Weise ausgerichtet sind.

Sobald die Steuerbolzen in die Steuerkurven der Lünettenarme eingreifen, übernehmen diese die Positionierung der beiden äußeren Lünettenarme bezogen auf das Mittelstück, so dass die Lünettenarme beim Auftreffen der Steuerbolzen der Führungsleisten nach innen entlang der Steuerfläche der Steuerkurven gezogen werden, wodurch die dem Werkstück zugewandten freien Enden der äußeren Lünettenarme auf dieses zu bewegt sind.

Da die beiden sichelförmig ausgestalteten Halbschalen mittels Schrauben und Druckfedern quer zur Bewegungsrichtung des Mittelstückes variabel bewegbar sind, können bereits geringfügige Positionsveränderungen der beiden Halbschalen eine ausreichende Zentrierung des Werkstückes im Raum aufgrund der exakten Positionsbestimmung der drei Lünettenarme eingestellt werden, ohne dass der die Lünette Einstellende eine umfangreiche Berufserfahrung benötigt, denn bereits durch das Einspannen des Werkstückes und das anschließende Messen der Position des Werkstückes im Raum ist eindeutig ersichtlich, ob das Werkstück in horizontaler und/oder in vertikaler Ebene zu verschieben und welcher Betrag der Verschiebung notwendig ist, um eine zentrische Positionierung des Werkstückes im Raum zu erreichen.

In der Zeichnung ist ein erfindungsgemäßes Ausführungsbeispiel dargestellt, das nachfolgend näher erläutert ist. Im Einzelnen zeigt:
- Figur 1: eine Lünette mit zwei Gehäusehälften zwischen denen ein platten-förmiges Mittelstück axial verschiebbar eingesetzt ist, das durch einen-Betätigungskolben angetrieben ist und mit drei dem Mittelstück zuge-ordneten Lünettenarmen, durch die ein Werkstück im Raum zu zen- trieren ist und mit zwei in einer der Gehäusehälften eingesetzten und quer zur Bewegungsrichtung des Mittelstückes bewegbaren sichelför-mig gekrümmten Halbschalen, in Explosionsdarstellung,
- Figur 2: die Lünette gemäß Figur 1, in Explosionsdarstellung und im teilweise zusammengebauten Zustand,
- Figur 3a: die Lünette gemäß Figur 1, im zusammengebauten und im Spannzustand des Werkstückes,
- Figur 3b: die Lünette gemäß Figur 3a entlang der Schnittlinie IIIb-IIIb,
- Figur 3c: die Lünette gemäß Figur 3a entlang der Schnittlinie IIIc-IIIc,
- Figur 4a: die Lünette gemäß Figur 1, in Explosionsdarstellung mit Einzelbau-teilen in vergrößerter Ansicht und im Bereich des oberen äußeren Lünettenarmes,
- Figur 4b: die Lünette gemäß Figur 1 in Explosionsdarstellung und vergrößerter Ansicht im Bereich des unteren Lünettenarmes,
- Figuren 5a bis 5e: die Lünette gemäß Figur 3a in unterschiedlichen Betriebsstel-lungen, nämlich von einer Ausgangsposition bis zu einem Spannzustand,
- Figuren 6a und 6b: die Verstellmöglichkeiten der ersten Halbschale in den beide Gehäusehälften gemäß Figur 3a zur horizontalen Ausrichtung der Lünettenarme jeweils im Schnitt und
- Figuren 7a und 7b: die Relativbewegungen der zweiten Halbschale gemäß Figur 3a in den Gehäusehälften zur vertikalen Zentrierung des Werkstü-ckes mittels den beiden äußeren Lünettenarmen, jeweils im Schnitt.

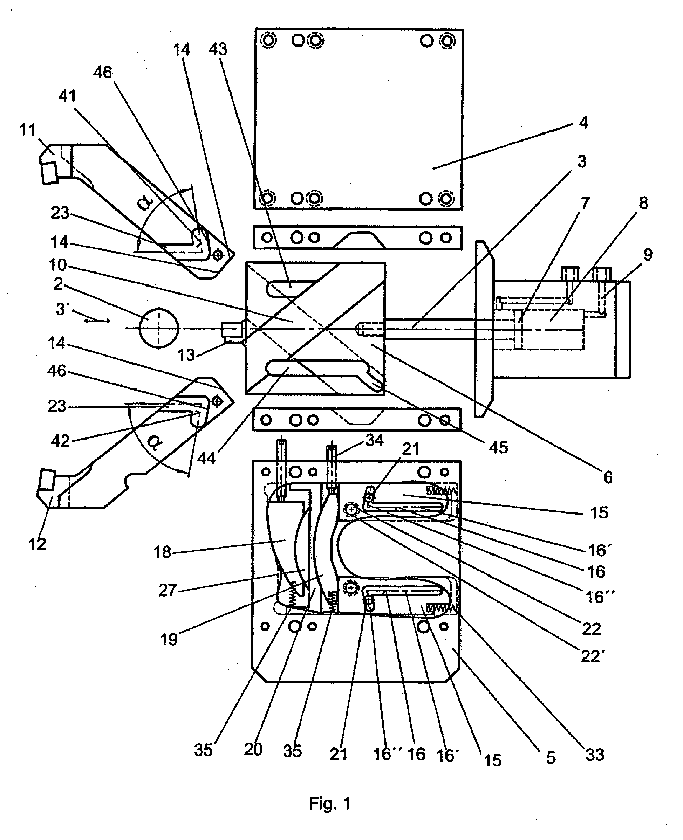

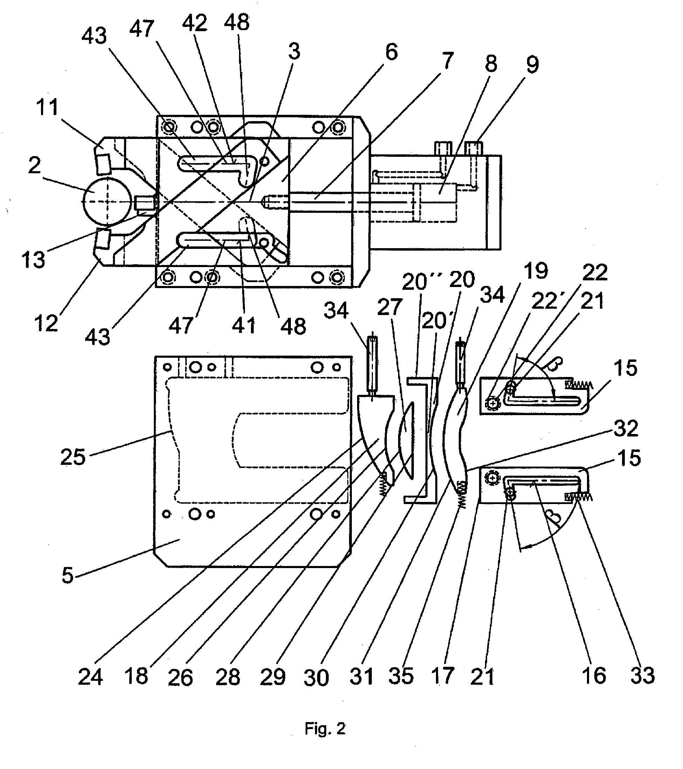

In den Figuren 1 und 2 ist eine Lünette 1 abgebildet, durch die ein rotationssymmetrisches Werkstück 2 im Raum derart zentriert und drehbar gehalten ist, dass die Rotationsachse des Werkstückes 2 möglichst keine Durchbiegung aus der Horizontalen aufgrund von Eigengewichtskräften und auf das Werkstück 2 einwirkenden Bearbeitungskräfte erfährt. Die Rotationsachse des Werkstückes 2 soll demnach durch die Lünette 1 in einer bestimmten Position im Raum gehalten sein.

Die Lünette 1 besteht aus zwei Gehäusehälften 4 und 5, die eine Längsachse 3 aufweisen. Zwischen den beiden Gehäusehälften 4 und 5 ist ein Mittelstück 6 axial verschiebbar gelagert, dessen Bewegungsrichtung mit der Bezugsziffer 3' bezeichnet ist und die parallel zu der Längsachse 3 der Lünette 1 verläuft.

Das Mittelstück 6 ist beispielsweise über eine Schrauben- Gewinde-Verbindung mit einem Betätigungskolben 7 verbunden. Der Betätigungskolben 7 verläuft in einem Druckraum 8, der mittels Steuerleitungen 9, beispielsweise mit Hydraulikflüssigkeit, befüllbar bzw. evakuierbar ist, so dass der Druckraum 8 unterschiedliche Druckzustände aufweist, durch die der Betätigungskolben 7 in Hubbewegung versetzt werden kann. Durch den Betätigungskolben 7 ist demnach das Mittelstück 6 in Bewegungsrichtung 3' antreibbar und auf das Werkstück 2 zustellbar bzw. von diesem wegziehbar.

In dem Mittelstück 6 sind zwei Linearführungsnuten 10 eingearbeitet, die auf den beiden gegenüberliegenden großflächigen Stirnseiten 6' des Mittelstückes 6 kreuzweise zueinander verlaufen. Die beiden Linearführungsnuten 10 sind schräg, vorzugsweise in einem Winkel von etwa 10° bis 30° bezogen auf die Längsachse 3 der Lünette 1 angeordnet.

In die Linearführungsnuten 10 sind zwei Lünettenarme 11 und 12 der Lünette 1 verschiebbar eingesetzt. Zwischen den beiden äußeren Lünettenarmen 11 und 12 ist ein mittlerer Lünettenarm 13 unmittelbar an dem Mittelstück 6 befestigt, so dass dieses zwischen den beiden äußeren Lünettenarmen 11 und 12 angeordnet ist. Die drei Lünettenarme 11, 12 und 13 sind dem einzuspannenden Werkstück 2 zugewandt und ragen daher teilweise sowohl aus dem Mittelstück 6 als auch aus den beiden Gehäusehälften 4 und 5 hinaus. Durch die Bewegung des Mittelstücks 6 in Richtung des Werkstückes 2 werden daher die drei Lünettenarme 11,12 und 13 gemeinsam auf das Werkstück 2 zugestellt. Eine Relativbewegung der beiden äußeren Lünettenarme 11 und 12 bezogen auf das Mittelstück 6 erfolgt in der Linearführungsnut 10 zunächst während der Zustellung des Mittelstückes 6 nicht.

Darüber hinaus sind in das Mittelstück 6 zwei Führungsbahnen 43 und 44 eingearbeitet, die eine lineare Kontur aufweisen. Die eine der Führungsbahnen 43 mündet dabei in eine der Linearführungen 10 und die andere der Führungsbahnen 44 weist einen Freiraum 45 auf, der nach außen von der Führungsbahn 44 in etwa in einem Winkel α von 80° absteht.

In die dem Mittelstück 6 zugeordneten freien Enden 14 der beiden äußeren Lünettenarme 11 und 12 ist jeweils eine Steuerkurve 41 und 42 eingearbeitet. Die Steuerkurven 41 und 42 bestehen aus zwei Teilbereichen 47 und 48. Der erste Teilbereich 47 verläuft parallel zu der Längsachse 3 der Lünette 1 und der zweite Teilbereich 48 steht in einem Winkel β von etwa 85° von dem ersten Teilbereich 47 ab und bildet eine nachfolgend noch näher erläuterte Steuerfläche 46. Der zweite Teilbereich 48 weist im montierten Zustand der beiden äußeren Lünettenarme 11 und 12 in das Innere, also aufeinander zu. Die Steuerkurven 41 und 42 sind im Wesentlichen fluchtend zu den Führungsbahnen 43 und 44 des Mittelstückes 6 ausgerichtet.

Des Weiteren sind an der Gehäusehälfte 4 zwei Führungsleisten 15 angeordnet, die parallel zu der Längsachse 3 und beabstandet von dieser verlaufen. Die Führungsleisten 15 können auch in der anderen Gehäusehälfte 5 oder 4 in Gleitelementen angeordnet sein. Die Führungsleisten 15 sind in der Gehäusehälfte 4 geringfügig gleitend gelagert, so dass die Position der Führungsleisten 15 relativ zu den Gehäusehälften 4 und 5 veränderbar sind. Die Führungsleisten 15 liegen in Längsrichtung 3 der Lünette 1 an der Gehäusehälften 4 an und werden von diesen abgestützt.

An jedem der Führungsleisten 15 ist ein Steuerbolzen 22, der senkrecht von diesem in das innere der Gehäusehälften 4 bzw. 5 absteht, angebracht. Der Steuerbolzen 22 weist eine Rolle 22' auf, die drehbar an dem Steuerbolzen 22 angebracht ist. Der Außendurchmesser der Rolle 22' entspricht exakt der Breite der jeweiligen Steuerkurve 41 und 42 in den beiden äußeren Lünettenarmen 11 und 12, denn die Rolle 22' des Steuerbolzens 22 soll im Spannzustand in die Steuerkurve 41 bzw. 42 eintauchen und die Bewegung der beiden äußeren Lünettenarme 11 und 12 definiert steuern.

Zur Relativbewegung der Führungsleisten 15 und zu dessen Positionierung sind zwei Halbschalen 18 und 19 vorgesehen. Beide Halbschalen 18 und 19 sind in ihrem Querschnitt sichelförmig gekrümmt, um unterschiedlich groß bemessene Breiten bezogen auf die Bewegungsrichtung 3' des Mittelstücks 6 aufzuweisen. Die erste Halbschale 18 liegt mit ihrer gebogenen Außenseite 24 an einer Anlagefläche 25 der Gehäusehälfte 5 an und wird von dieser in Bewegungsrichtung 3' abgestützt. Die erste Halbschale 18 ist mittels einer Schraube 34 senkrecht zu der Bewegungsrichtung 3' des Mittelstückes 6 bewegbar. Auf der gegenüberliegenden Seite der ersten Halbschale 18 bezogen auf die Schraube 34 ist eine Druckfeder 35 angeordnet, die eine Gegenkraft zu der von der Schraube 34 ausgeübten Kraft aufweist, so dass die erste Halbschale 18 zwischen der Schraube 34 und der Druckfeder 35 abgestützt und fixiert ist.

Die Innenseite 26 der ersten Halbschale 18 weist einen konstanten Kreisbogen auf, der als Anlage für ein Ausgleichselement 27 dient. Die der ersten Halbschale 18 zugewandte erste Oberfläche 28 des Ausgleichselementes 27 besitzt eine Kontur, die an die Kontur der Innenseite 26 der ersten Halbschale 18 angepasst ist; die zweite Oberfläche 29 des Ausgleichselementes 27 ist plan ausgestaltet und verläuft senkrecht zu der Längsachse 3.

An der zweiten Oberfläche 29 des Ausgleichselementes 27 ist ein U-förmiger Ausgleichsarm 20 vorgesehen. Der Ausgleichsarm 20 besteht aus zwei parallel zueinander verlaufenden Schenkeln 20", die mittels eines Verbindungssteges 20' verbunden sind. Die beiden Schenkel 20" stützen sich an der Gehäusehälfte 5 parallel zu der Bewegungsrichtung 3' des Mittelstückes 6 ab.

In der dem Ausgleichselement 27 abgewandten Seite des Verbindungssteges 20' ist eine Mulde 30 eingearbeitet, deren Innenkontur im Querschnitt bogenförmig gekrümmt ausgestaltet ist. In die Mulde 30 ist die zweite Halbschale 19 eingesetzt, deren dem Verbindungssteg 20' zugewandten Oberfläche 31 an die Innenkontur der Mulde 30 angepasst ist.

Die zweite Halbschale 19 weist zwei Stirnflächen 32 auf, die jeweils einem der beiden Führungsleisten zugewandt ist und an denen die Führungsleisten 15 anliegen, denn diese werden mittels einer Schraubendruckfeder 33 gegen die Stirnflächen 32 der zweiten Halbschale 19 gedrückt. Aufgrund der von den Schrauben-Druckfedem 33, die parallel zu der Längsachse 3 der Lünette 1 verlaufen, ausgeübte Vorspannkraft werden demnach die Führungsleisten 15 in Richtung auf die zweite Halbschale 19 gedrückt, so dass die zweite Halbschale 19 eine Anpresskraft auf den Ausgleichsarm 20, auf das Ausgleichselement 27 und somit auf die erste Halbschale 18 ausübt. Die erste und zweite Halbschale 18 und 19 sowie das Ausgleichselement 27 und der Ausgleichsarm 20 sind demnach bezogen auf die Bewegungsrichtung 3' des Mittelstücks 6 in Reihe angeordnet und verlaufen senkrecht zu der Längsachse 3.

Auch die zweite Halbschale 19 wird mittels einer Schraube 34 und einer Druckfeder 35 relativ zu dem Verbindungssteg 20' bzw. dem Ausgleichsarm 20 senkrecht zu der Längsachse 3 bewegt, wodurch die Anschlagspositionen der Führungsleisten 15 synchron zueinander verändert werden kann. Dies wird nachfolgend im Einzelnen noch näher erläutert.

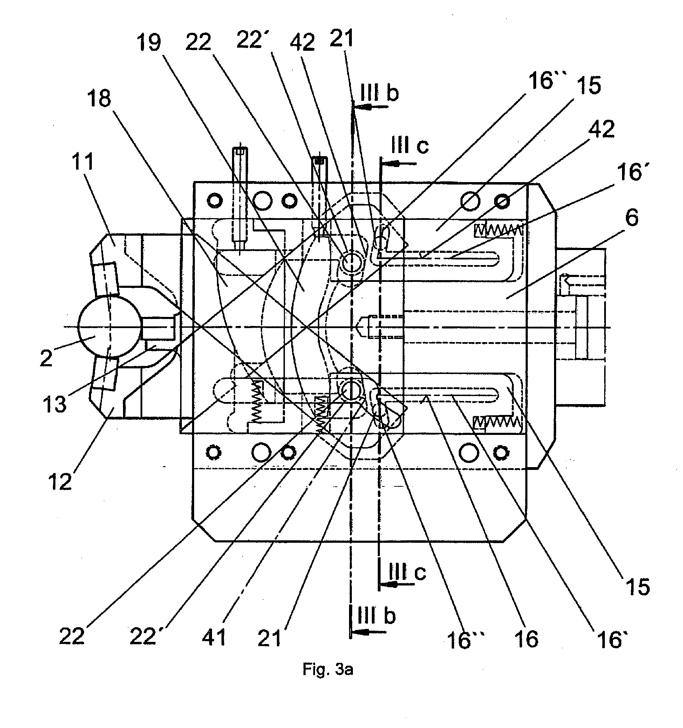

In Figur 3a ist nunmehr der zusammengebaute Zustand der Lünette 1 zu entnehmen und es ist gezeigt, dass die drei Lünettenarme 11, 12 und 13 das Werkstück im Raum fixieren. Die erste und zweite Halbschale 18 und 19 befinden sich in ihrer jeweiligen Mittelstellung bezogen auf die Längsachse 3.

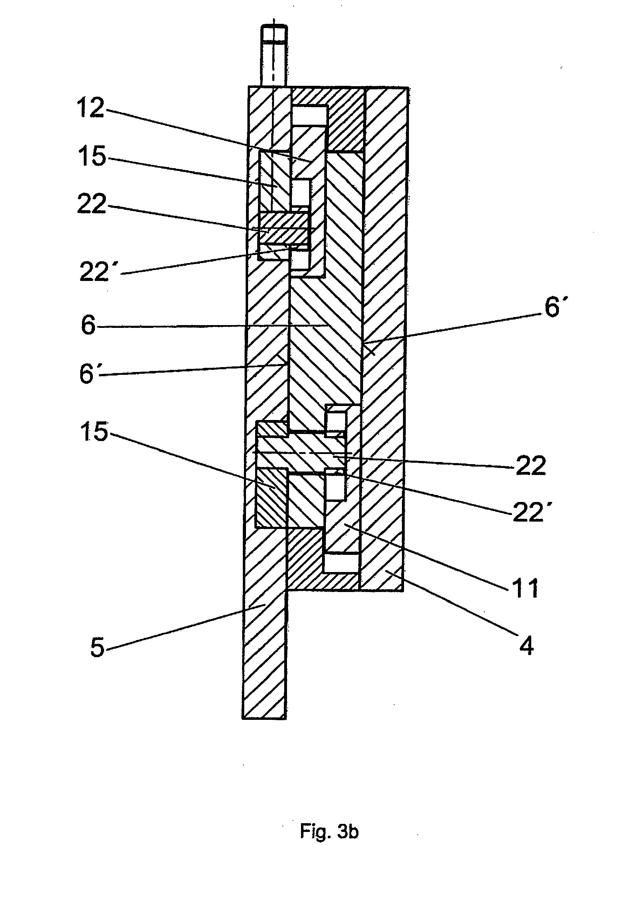

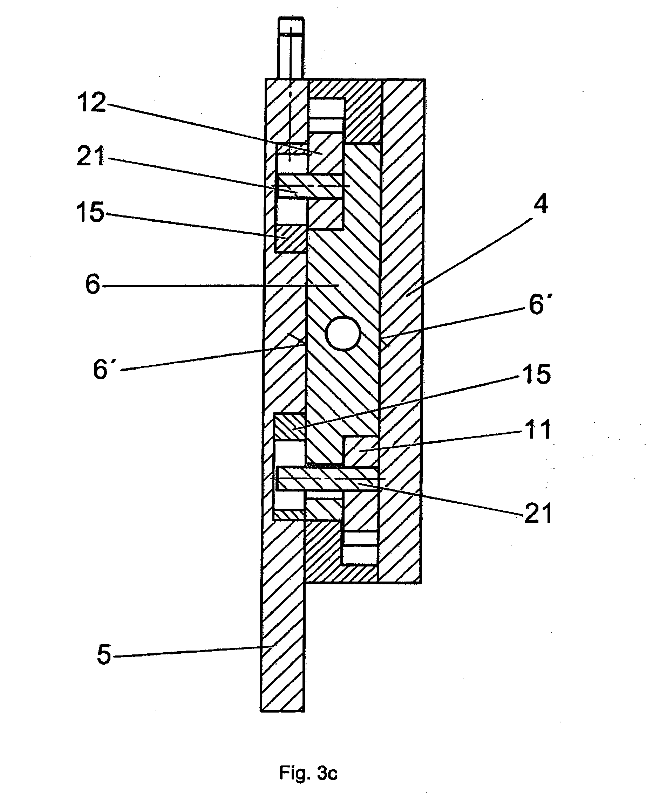

Ferner ist aus den Figuren 3a, 3b und 3c ersichtlich, dass in die beiden Führungsleisten 15 jeweils eine Führungskurve 16, die aus zwei Teilbereichen 16' und 16" gebildet ist, eingearbeitet ist. In die Führungskurve 16 ist jeweils ein an dem freien Ende 14 der beiden äußeren Lünettenarme 11 und 12 und senkrecht von diesem abstehenden Führungsbolzen 21 eingesetzt, der in der Führungskurve 16 verschiebbar gelagert ist. Der Führungsbolzen 21 hat die Aufgabe, die beiden äußeren Lünettenarme 11 und 12 über die Führungsleiste 15 zuverlässig an dem Mittelstück 6 zu halten, wenn und solange der Steuerbolzen 22 nicht in die Steuerkurven 41 und 42 der Lünettenarme 11 und 12 eingeschoben ist.

Der zweite Teilbereich 16" der Führungskurve 16 steht nach außen etwa in einem Winkel von 80° von dem ersten Teilbereich 16' ab; zwischen dem Führungsbolzen 21 und der Führungskurve 16 liegt ein Spiel vor, so dass die Zustellbewegung der beiden äußeren Lünettenarme 11 und 12, wenn der Steuerbolzen 22 in die Steuerkurven 41 und 42 eingefahren ist, nicht behindert wird.

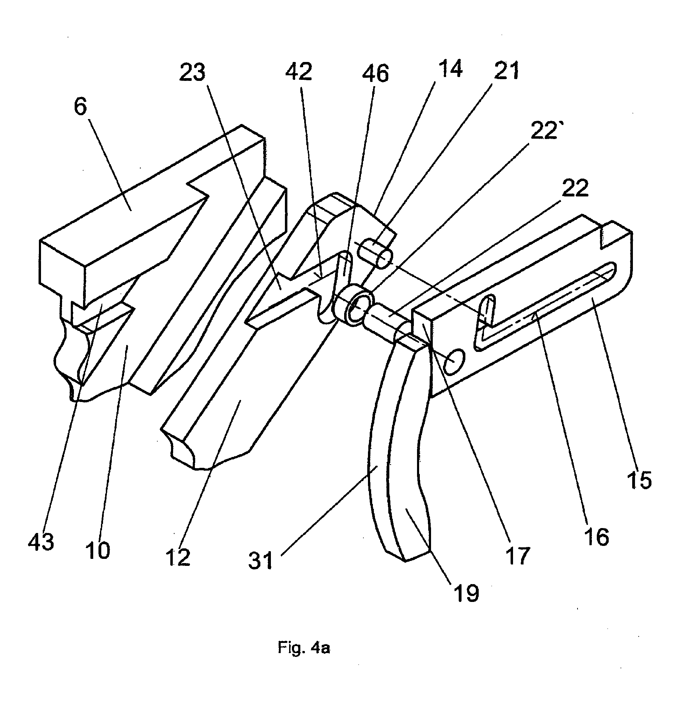

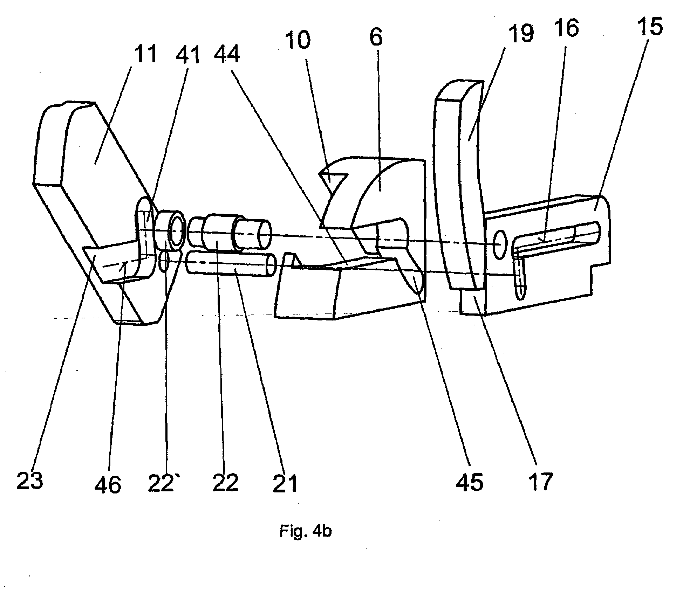

In den Figuren 4a und 4b ist die Sandwichbauweise der Lünette 1 dargestellt, deren einzelnen Bauteile, insbesondere das Mittelstück 6, die beiden äußeren Lünettenarme 11 und 12, die Führungsleisten 15 und die Halbschalen 18 und 19 in unterschiedlichen Ebenen angeordnet sind, die parallel zueinander verlaufen. Solange die beiden Gehäusehälften 4 und 5 fest miteinander verbunden sind und einen ausreichend groß bemessenen Zwischenraum einschließen, können die in den Gehäusehälften 4 und 5 axial verschiebbar gelagerten Bauteile in Richtung auf das Werkstück 2 oder vice verca bewegt werden. Eine solche Bewegung ist zum Einen erforderlich, um die Zustellwege des Mittelstückes 6 exakt auf das Werkstück 2 zu definieren und zum Anderen, um die Anschlagspositionen der beiden äußeren Lünettenarme 11 und 12 synchron aufeinander abzustimmen.

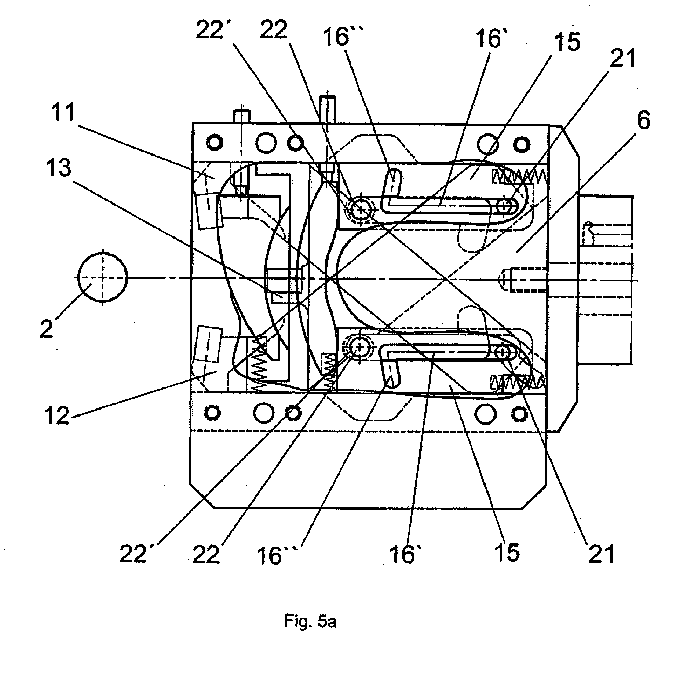

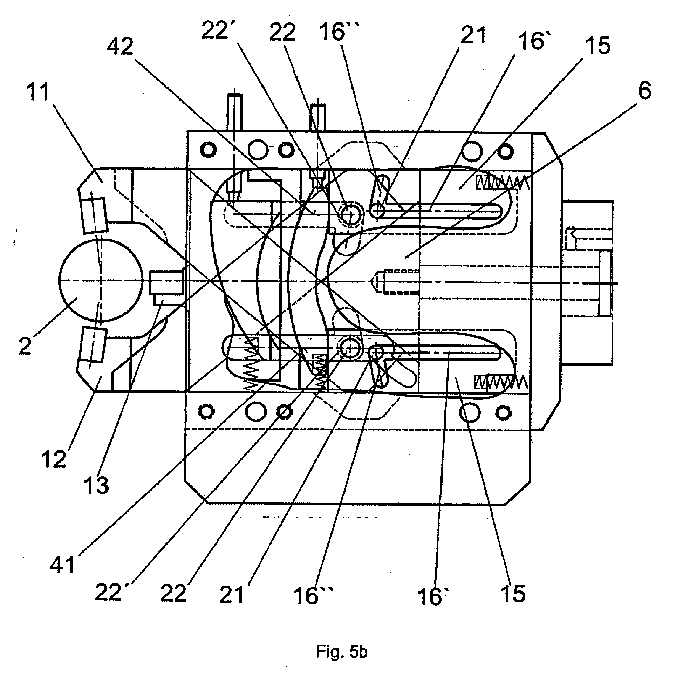

Aus den Figuren 5a bis 5e ist die Zustellbewegung des Mittelstückes 6 in Richtung auf das Werkstück 2 ersichtlich. Die in Figur 5a dargestellte Ausgangssituation wird durch den Antrieb des Mittelstückes 6 in Richtung auf das Werkstück 2 in eine Zwischenposition gemäß Figur 5b überführt. Dabei sind die Führungsbolzen 21 in der Führungsleiste 15 axial verschoben worden und der Steuerbolzen 22 taucht in die Steuerkurven 41 und 42 der Lünettenarme 11 und 12 ein. Die Lünettenarme 11, 12 und 13 weisen einen bestimmten gleich groß bemessenen Abstand zu dem Werkstück 2 auf und die Steuerbolzen 22 liegen an der Steuerfläche 46 der beiden Steuerkurven 41 und 42 an.

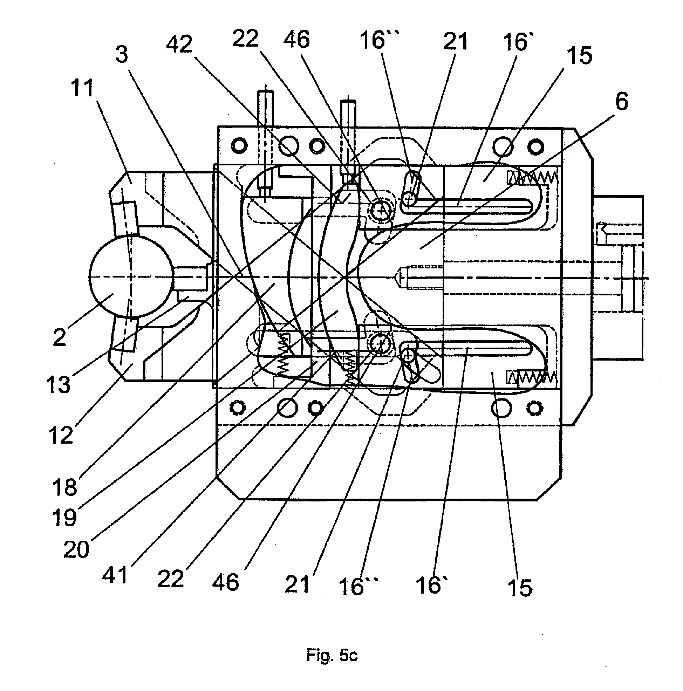

In Figur 5c ist der erste Wirkkontakt der drei Lünettenarme 11, 12 und 13 auf dem Werkstück 2 gezeigt. Die durch die erste Halbschale 18 definierte Position des Ausgleichsarmes 20 begrenzt den Zustellweg des Mittelstückes 6 in Richtung auf das Werkstück 2 und bildet somit für dieses eine Anschlagsfläche. Die Steuerbolzen 22 sind demnach teilweise in den nach innen abstehenden zweiten Teilbereich 48 der jeweiligen Steuerkurve 41 bzw. 42 eingefahren, wodurch die beiden äußeren Lünettenarme 11 und 12 relativ zu dem Mittelstück 6 jeweils nach außen entlang der Linearführungsnut 10 bewegt werden, so dass die dem Werkstück 2 zugewandten freien Enden der beiden äußeren Lünettenarme 11 und 12 auf dieses zugestellt sind.

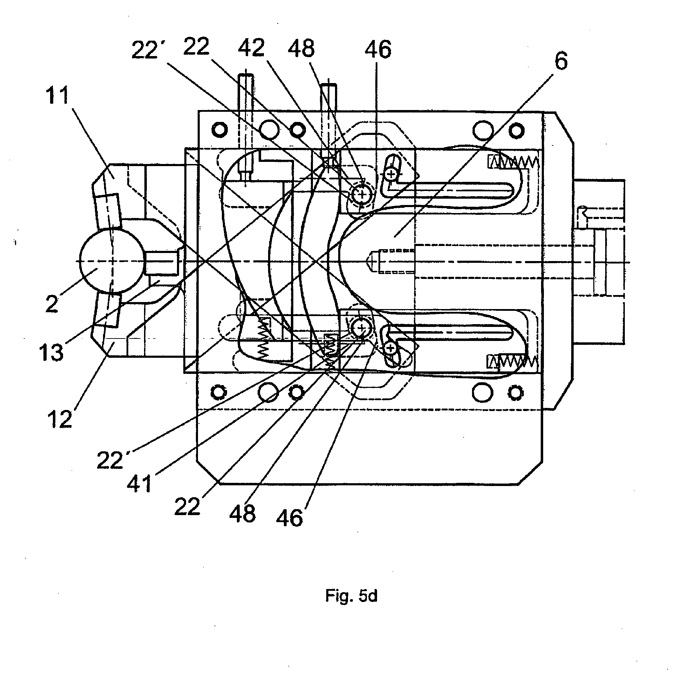

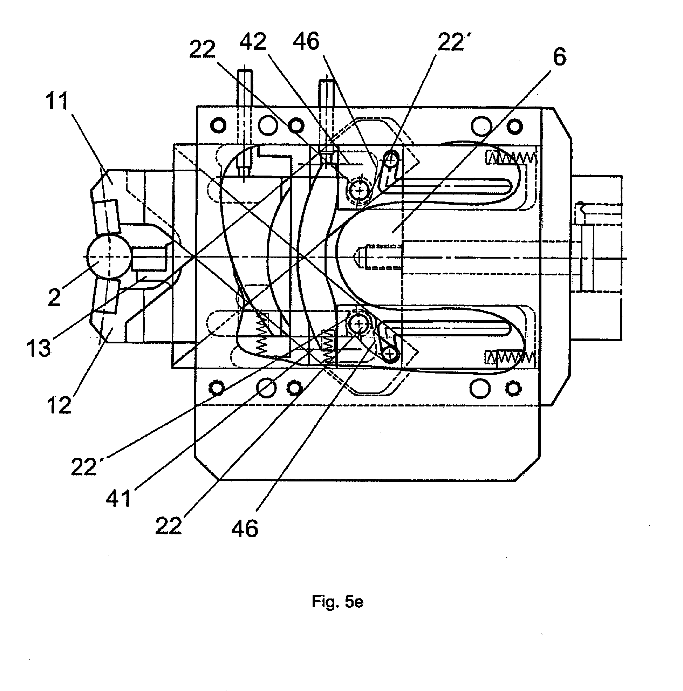

In den Figuren 5d und 5e ist die Spannbewegung der Lünettenarme 11,12 und 13 zu entnehmen, da die Steuerbolzen 22 weiter in Richtung des zweiten Teilbereiches 48 der jeweiligen Steuerkurve 41 und 42 einfahren, wodurch die Lünettenarme 11 und 12 eine definierte Spannkraft auf das Werkstück 2 ausüben. Der mittlere Lünettennarm 13 wird aufgrund der axialen Zustellbewegung des Mittelstückes 6 synchron mit den äußeren Lünettenarmen 11 und 12 auf das Werkstück 2 aufgepresst, so dass von allen drei Lünettenarmen 11, 12 und 13 eine gleich groß bemessene Spannkraft auf das Werkstück 2 einwirkt.

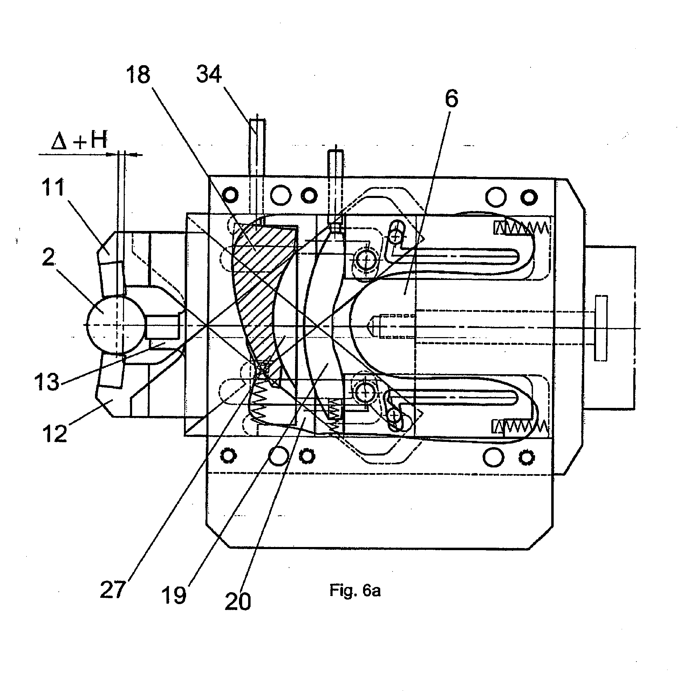

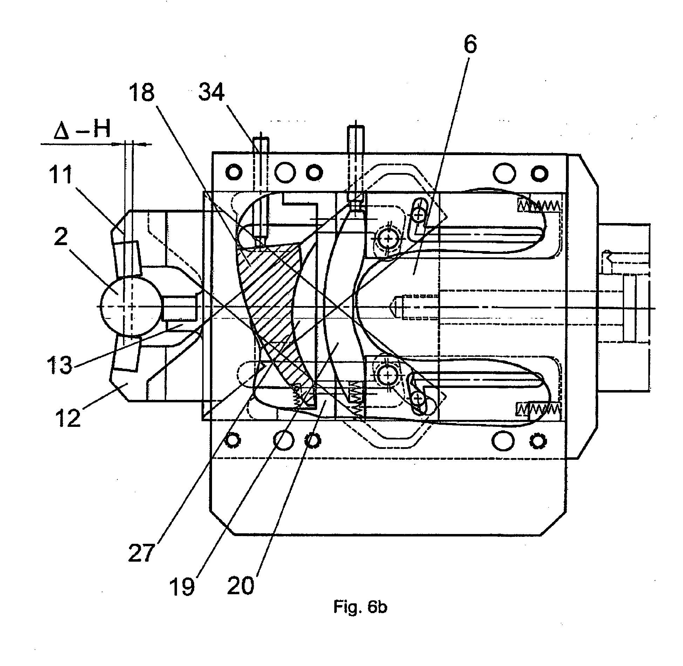

In den Figuren 6a und 6b ist die horizontale Verstellung bzw. die horizontale Positionierung des Werkstückes 2 zu entnehmen. Zu diesem Zweck wird die erste Halbschale 18 mittels der Schraube 34 quer zur Bewegungsrichtung 3' des Mittelstückes 6 bewegt. Aufgrund der sichelförmig gebogenen Querschnittskontur der ersten Halbschale 18, verändert sich dadurch der Abstand zwischen der Anlagefläche 25, der Gehäusehälfte 5 und der Innenseite 26 der ersten Halbschale 18. Diese Abstandsveränderung bewirkt, dass der Zustellweg des Mittelstückes 6 größer oder kleiner bemessen ist als der Zustellweg des Mittelstückes 6, der in den Figuren 5a bis 5e eingestellt ist. Aufgrund der Abstandsvergrößerung oder -verkleinerung des Mittelstückes 6 bezogen auf das einzuspannende Werkstück 2 treten die drei Lünettenarmme 11, 12 und 13 früher oder später in Wirkverbindung mit dem Werkstück 2. Jedoch sind die Lünettenarme 11, 12 und 13 in Ihrer jeweiligen Zustellbewegung fest mit dem Mittelstück 6 gekoppelt, so dass die Zustellungsgeschwindigkeiten der Lünettenarme 11,12 und 13 gleich groß sind und deren Abstand zu dem Werkstück 2 identisch ist.

Folglich verändert sich dadurch die Position des Werkstückes 2 im Raum, und zwar ausschließlich in der horizontalen Ebene. Diese Horizontalveränderung des Werkstückes 2 ist schematisch in Figur 6a mit Δ+H bezeichnet. In Figur 6b ist die entgegengesetzte Extremposition und damit die Verschiebung des Werkstückes 2 um den Betrag Δ -H gezeigt.

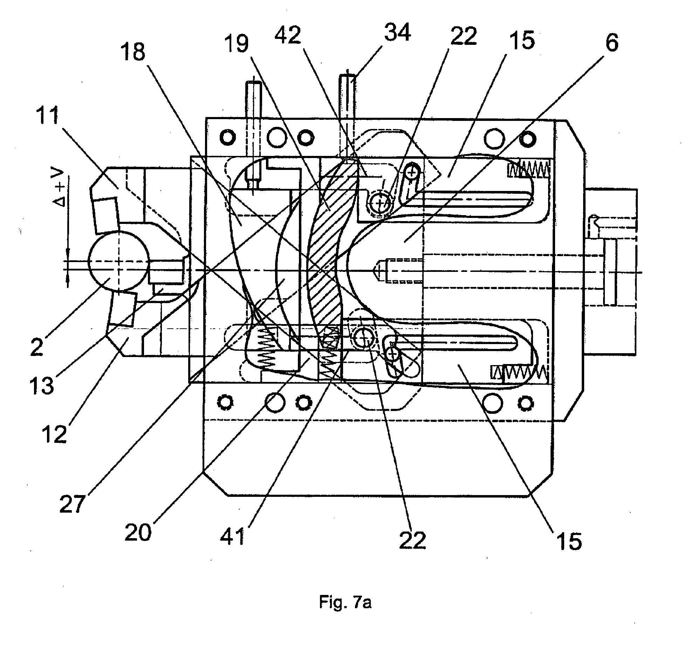

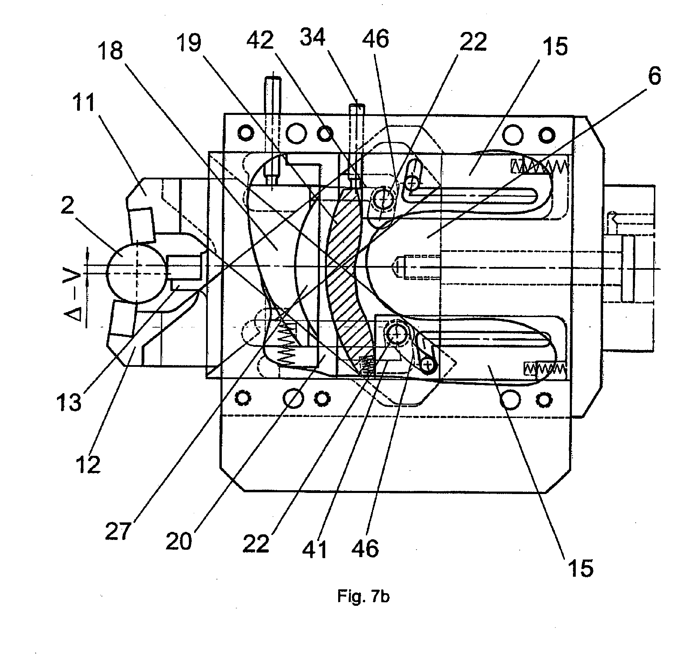

In den Figuren 7a und 7b ist die vertikale Ausrichtung des Werkstückes 2 mittels den beiden äußeren Lünettenarmen 11 und 12 zu entnehmen. Zu diesem Zweck ist die zweite Halbschale 19 mittels der Schraube 34 relativ zu dem U-förmigen Ausgleichsarm 20 und quer zur Bewegungsrichtung 3' des Mittelstückes 6 veränderbar. Aufgrund der sichelförmigen Querschnittskontur der zweiten Halbschale 19 verändert sich der Abstand zwischen dem Ausgleichsarm 20 und den beiden Führungsleisten 15 gegenläufig synchron, so dass die Führungsleisten 15 entweder in der Mittelposition fluchtend zueinander verlaufen oder aber in den gezeigten Einstellvarianten der Figuren 7a und 7b versetzt zueinander angeordnet sind. Also einen unterschiedlich groß bemessenen Abstand zu dem Ausgleichsarm 20 einnehmen. Dadurch verändert sich der Anschlagszeitpunkt der Steuerbolzen 22, die an den Führungsleisten 15 angebracht sind, in den Steuerkurven 41 und 42. Aufgrund der räumlich unterschiedlich ausgerichteten Steuerbolzen 22 tauchen diese nämlich zu unterschiedlichen Zeitpunkten in die Steuerkurven 41 und 42 der beiden äußeren Lünettenarme 11 und 12 ein und werden bei konstanter Zustellgeschwindigkeit des Mittelstückes 6 zeitlich versetzt zueinander in Abhängigkeit von der gewählten Position der Führungsleisten 15 und 16 in Wirkverbindung mit der Steuerfläche 46 der jeweiligen Steuerkurve 41 bzw. 42 treten. Dies wiederum führt dazu, dass einer der äußeren Lünettenarme 11 oder 12 zeitlich versetzt zu dem jeweils anderen Lünettenarm 12 oder 11 auf das Werkstück 2 zubewegt ist und mit diesem anschließend in formschlüssige Wirkverbindung tritt.

Die Positionsverschiebung des Werkstückes 2 sind in den Figuren 7a und 7b in der vertikalen Ebene mit Δ+V bzw. Δ-V wiedergegeben.

## Patentansprüche

1. Lünette (1) zur Zentrierung eines rotationssymmetrischen Werkstückes (2) im Raum,
bestehend aus:
- zwei zueinander beabstandet angeordneten und fest miteinander verbundenen Gehäusehälften (4, 5),
- mit einem zwischen den beiden Gehäusehälften (4, 5) angeordneten plattenförmigen Mittelstück (6), das mittels eines Betätigungskolbens (7) in axialer Bewegungsrichtung (3) auf das Werkstück (2) verschiebbar in den Gehäusehälften (4, 5) gelagert ist,
- mit zwei in den beiden gegenüberliegenden großflächigen Stirnseiten (6') des Mittelstückes (6) eingearbeiteten Linearführungsnuten (10), die kreuzweise zueinander und schräg zu der Bewegungsrichtung (3') des Mittelstückes (6) verlaufen,
- mit zwei äußeren Lünettenarmen (11, 12), die mit ihren jeweiligen freien Enden (14) in jeweils einer der Linearführungsnuten (10) des Mittelstückes (6) verschiebbar gelagert sind,
- und mit einem mittleren Lünettenarm (13), der an dem Mittelstück (6) zwischen den äußeren Lünettenarmen (11, 12) befestigt ist,
**dadurch gekennzeichnet,**
**dass** zwischen den beiden Gehäusehälften (4, 5) jeweils zwei Führungsleisten (15) axial verschiebbar eingesetzt sind, die parallel und beabstandet zu der Längsachse (3) der beiden Gehäusehälften (4, 5) verlaufen, dass an jeder Führungsleiste (15) ein von dieser senkrecht abstehender Steuerbolzen (22) angeordnet ist, der dem Mittelstück (6) zugesandt ist, dass in das Mittelstück (6) eine erste und zweite lineare Führungsbahn (43, 44) eingearbeitet ist, die voneinander beabstandet sind, parallel zu der Längsachse (3) und fluchtend zu jeweils einem der Steuerbolzen (22) verlaufen, dass in die freien Enden (14) jedes der beiden äußeren Lünettenarme (11, 12) eine gekrümmte Steuerkurve (41, 42) eingearbeitet ist, die teilweise fluchtend zu jeweils einem der Steuerbolzen (22) und einer der Führungsbahnen (43, 44) des Mittelstückes (6) verlaufen, dass die Steuerbolzen (22) in die Steuerkurven (41, 42) eintauchen während das Mittelstück (6) in Richtung des Werkstückes (2) zugestellt ist, dass die Steuerbolzen (22) an der Innenseite der Steuerkurve (41, 42), unmittelbar bevor die Lünettenarme (11, 12, 13) mit dem Werkstück (2) in Wirkkontakt gelangen, anliegen, dass die Steuerkurven (41, 42) eine nach außen verlaufende Steuerfläche (46) aufweisen, durch die die äußeren Lünettenarme (11, 12) entlang der Linearführungsnut (10) nach außen zur Zustellang der Lünettenarme (11, 12) auf das Werkstück (2) bewegt sind, dass die Positionen der Führungsleisten (15) bezogen auf den Abstand zwischen diesen und dem einzuspannenden Werkstück (2) mittels einer ersten im Querschnitt sichelförmig gekrümmten Halbschale (18) derart einstellbar ist, dass die beiden äußeren Lünettenarme (11, 12) gleichzeitig oder zeitlich versetzt zu dem mittleren Lünettenarm (13) in Wirkverbindung mit dem Werkstück (2) gelangen und dass die Positionen der beiden Führungsleisten (15) aus einer fluchtenden Ausgangsposition gegenläufig synchron zueinander mittels einer zweiten im Querschnitt sichelförmig gekrümmten Halbschale (19) einstellbar sind.

2. Lünette nach Anspruch 1,
**dadurch gekennzeichnet,**
**dass** die beiden Halbschalen (18, 19) in Bewegungsrichtung (3') des Mittelstückes (6) in Reihe angeordnet und mittels eines Ausgleichsarmes (20) voneinander getrennt sind, der axial verschiebbar an einer der beiden Gehäusehälften (4 oder 5) abgestützt ist.

3. Lünette nach Anspruch 1 oder 2,
**dadurch gekennzeichnet,**
**dass** in jede der Führungsleisten (15) eine Führungskurve (16) eingearbeitet ist, dass an den beiden freien Enden (14) der Lünettenarme (11, 12) ein Führungsbolzen (21) senkrecht von diesem abstehend in Richtung des Mittelstückes (6) angebracht ist und dass der Führungsbolzen (21) in der Führungskurve (16) der Führungsleiste (15) axial verschiebbar eingesetzt ist.

4. Lünette nach einem der vorgenannten Ansprüche,
**dadurch gekennzeichnet,**
**dass** die Führungskurve (16) aus einer Führungsbahn (16') und einer von dieser abstehenden Aussparung (16") gebildet ist und dass die Aussparung (16") in einem Winkel (α) von 10° bis 85° von der Führungsbahn (16') absteht und dass die Aussparung (16") im Wesentlichen parallel zu der nach außen abstehenden Steuerkurve 41 bzw. 42 der Lünettenarme (11, 12) verläuft.

5. Lünette nach Anspruch 3 oder 4,
**dadurch gekennzeichnet,**
**dass** eine der in das Mittelstück (6) eingearbeiteten Führungsbahnen (44) einen Freiraum (45) aufweist, in den der Führungsbolzen (21) des Lünettenarmes (11) bewegbar ist.

6. Lünette nach einem der vorgenannten Ansprüche,
**dadurch gekennzeichnet,**
**dass** die erste Halbschale (18) im montierten Zustand mit der dem Werkstück (2) zugewandten Außenseite (24) an einer Anlagefläche (25), die an einer der beiden Gehäusehälften (4 oder 5) angearbeitet ist, anliegt, dass die Konturen der Anlagefläche (25) und die Außenseite (24) der Halbschale (18) miteinander korrespondieren und dass die Halbschale (18) relativ zu der Anlagefläche (25) und senkrecht zu der Bewegungsrichtung (3') des Mittelstückes (6) verschiebbar gelagert ist.

7. Lünette nach Anspruch 6,
**dadurch gekennzeichnet,**
**dass** die der Außenseite (24) gegenüberliegende Innenseite (26) der ersten Halbschale (18), vorzugsweise mit einem konstanten Radius, gebogen ist und dass an der Innenseite (26) der ersten Halbschale (18) im montierten Zustand ein Ausgleichselement (27) anliegt, dessen der ersten Halbschale (18) zugewandte Oberfläche (28) an die Innenkontur der Innenseite (26) der ersten Halbschale (18) angepasst und dessen gegenüberliegende Oberfläche (29) plan ausgestaltet ist.

8. Lünette nach Anspruch 7,
**dadurch gekennzeichnet,**
**dass** das Ausgleichselement (27) mit der planen Oberfläche (29) im montierten Zustand in Richtung der Bewegungsrichtung (3') des Mittelstückes (6) spielfrei an dem Ausgleichsarm (20) anliegt.

9. Lünette nach einem der vorgenannten Ansprüche,
**dadurch gekennzeichnet,**
**dass** der Ausgleichsarm (20) im Querschnitt als U-Profil ausgestaltet ist und dass in den Verbindungssteg (20') des Ausgleichsarmes (20) eine im Querschnitt gekrümmte Mulde (30) eingearbeitet ist, in die die zweite Halbschale (19) eingesetzt ist und dass die Oberflächenkontur der zweiten Halbschale (19) mit der Innenkontur der Mulde (30) des Ausgleichsarmes (20) korrespondiert.

10. Lünette nach einem der vorgenannten Ansprüche,
**dadurch gekennzeichnet,**
**dass** die beiden Stirnflächen (32) der zweiten Halbschale (19) im montierten Zustand unmittelbar gemeinsam an jeweils einer der Führungsleisten (15) anliegen und eine Anlagefläche (17) für die axiale Bewegung der Führungsleisten (15) bilden.

11. Lünette nach Anspruch 9,
**dadurch gekennzeichnet,**
**dass** die beiden Führungsleisten (15) mittels einer Schraubendruckfeder (33) unter Vorspannung an der jeweiligen Anlagefläche (17) der zweiten Halbschalen (19) angepresst sind und dass durch diese Vorspannkraft die zweite Halbschale (19) gegen den Ausgleichsarm (20) und dieser gegen das Ausgleichselement (27) und die erste Halbschale (18) gedrückt sind.

12. Lünette nach einem der vorgenannten Ansprüche,
**dadurch gekennzeichnet,**
**dass** die erste und zweite Halbschale (18, 19) senkrecht zu der Bewegungsrichtung (3') des Mittelstückes (6), vorzugsweise mittels Schrauben (34) und Schraubendruckfedern (35) als Gegenkraft relativ zu den beiden Gehäusehälften (4 oder 5) bewegbar sind.

## Claims

1. A stationary support (1) for centring a rotationally symmetrical workpiece (2) in the space,
consisting of:
- two housing halves (4, 5) arranged at a distance from one another and firmly connected together,
- with a plate-shaped middle piece (6) arranged between the two housing halves (4, 5), with the middle piece (6) mounted in the housing halves (4, 5) by means of an actuator piston (7) so it can be moved in an axial movement direction (3) to the workpiece (2),
- with two linear guide grooves (10) worked into both opposite largesurface end faces (6') of the middle piece (6), with the linear guide grooves (10) running in a cross-shaped arrangement and at an angle to the movement direction (3') of the middle piece (6),
- with two outer stationary support arms (11, 12), each of which has their free ends (14) mounted in each of the linear guide grooves (10) of the middle piece (6) in a movable arrangement,
- and with a middle stationary support arm (13) attached to the middle piece (6) between the outer stationary support arms (11, 12),
**characterised in that,**
two guide strips (15) are inserted between the two housing halves (4, 5) so as to be axially movable, running in parallel to and at a distance from the lengthways axis (3) of the two housing halves (4, 5), that a control pin (22) is arranged projecting at right angles from each guide strip (15) and the control pin (22) faces the middle piece (6), that a first and second linear guide path (43, 44) are worked into the middle piece (6) and are spaced apart from one another running in parallel to the lengthways axis (3) and each in line with one of the control pins (22), that a curved control cam (41, 42) is worked into the free ends (14) of the two outer stationary support arms (11, 12) with each of the control cams (41, 42) running partially in line with one of the control pins (22) and one of the guide paths (43, 44) of the middle piece (6), that the control pins (22) engage in the control cams (41, 42) while the middle piece (6) is moved in the direction of the workpiece (2), that the control pins (22) on the inside of the control cam (41, 42) make active contact with the workpiece (2) immediately before the stationary support arms (11, 12, 13), that the control cams (41, 42) have a control surface (46) running outwards by means of which the outer stationary support arms (11, 12) are moved outwards for the feed movement of the stationary support arms (11, 12) to the workpiece (2), that the positions of the guide strips (15) can be adjusted in relation to the distance between them and the workpiece (2) to be clamped, in which case the adjustment takes place by means of a first half shell (18) with a sickle-shaped cross section, and in such a way that the two outer stationary support arms (11, 12) reach an active connection with the workpiece (2) at the same time as or offset from the middle stationary support arm (13) and that the positions of the two guide strips (15) can be adjusted from an aligned starting position in opposite directions synchronous to one another by means of a second curved half shell (19) with a sickle-shaped cross section.

2. The stationary support in accordance with Claim 1,
**characterised in that,**
the two half shells (18, 19) are arranged in line in the movement direction (3') of the middle piece (6) and are separated from one another by means of a compensation arm (20) which is supported on one of the two housing halves (4 or 5) in an axially moving arrangement.

3. The stationary support in accordance with Claim 1 or 2,
**characterised in that,**
a guide cam (16) is worked into each of the guide strips (15), that a guide pin (21) is attached projecting at right angles from the two free ends (14) of the stationary support arms (11, 12) towards the middle piece (6) and that the guide pin (21) is inserted in the guide cam (16) of the guide strip (15) in an axially movable arrangement.

4. The stationary support in accordance with one of the aforementioned claims,
**characterised in that,**
the guide cam (16) is formed from a guide path (16') and a recess (16") projecting from this guide path (16') and that the recess (16") projects from the guide path (16') at an angle (α) from 10° to 85° and that the recess (16") mainly runs in parallel to the outwardly projecting control cam 41 or 42 of the stationary support arms (11, 12).

5. The stationary support in accordance with Claim 3 or 4,
**characterised in that,**
one of the guide paths (44) worked into the middle piece (6) has a void (45) in which the guide pin (21) of the stationary support arm (11) can be moved.

6. The stationary support in accordance with one of the aforementioned claims,
**characterised in that,**
in the assembled condition, the outside (24) of the first half shall (18) facing the workpiece (2) is in contact with a contact surface (25) worked onto one of the two housing halves (4 or 5), that the contours of the contact surface (25) and the outside (24) of the half shell (18) correspond to one another and that the half shell (18) is mounted so as to be movable relative to the contact surface (25) and at right angles to the movement direction (3') of the middle piece (6).

7. The stationary support in accordance with Claim 6,
**characterised in that,**
the inside (26) of the first half shell (18) opposite to the outside (24) is curved, preferably with a constant radius, and that a compensation element (27) is in contact with the inside (26) of the first half shell (18) in the assembled condition, with the surface (28) of the compensation element (27) facing the first half shell (18) adapted to the inside contour of the inside (26) of the first half shell (18) and its opposite surface (29) is configured as flat.

8. The stationary support in accordance with Claim 7,
**characterised in that,**
the flat surface (29) of the compensation element (27) makes contact with the compensation arm (20) in the assembled condition, without play in the direction of the movement direction (3') of the middle piece (6).

9. The stationary support in accordance with one of the aforementioned claims,
**characterised in that,**
the compensation arm (20) has a U-shaped cross section and that a trough (30) with a curved cross section is worked into the connection web (20') of the compensation arm (20), with the second half shell (19) inserted in the trough (30), and that the surface contour of the second half shell (19) corresponds to the inside contour of the trough (30) of the compensation arm (20).

10. The stationary support in accordance with one of the aforementioned claims,
**characterised in that,**
the two end faces (32) of the second half shell (19) make direct contact jointly one each on one of the guide strips (15) in the assembled condition, and form one contact surface (17) for the axial movement of the guide strips (15).

11. The stationary support in accordance with Claim 9,
**characterised in that,**
the two guide strips (15) are pressed against the corresponding contact surface (17) of the second half shells (19) by means of a coiled compression spring (33) under preload and that this preload presses the second half shell (19) against the compensation arm (20) which is in turn pressed against the compensation element (27) and the first half shell (18).

12. The stationary support in accordance with one of the aforementioned claims,
**characterised in that,**
the first and second half shell (18, 19) can be moved at right angles to the movement direction (3') of the middle piece (6), preferably by means of screws (34) and coiled compression springs (35) as a counter-force relative to the two housing halves (4 or 5).

## Revendications

1. Lunette (1) pour le centrage d'une pièce à usiner à symétrie de rotation (2) dans l'espace,
comprenant :
- deux demi-boîtiers (4, 5) espacés entre eux et rigidement liés ensemble,
- une pièce centrale (6) sous la forme d'une plaque et disposée entre les deux demi-boîtiers (4, 5) qui, moyennant un piston d'actionnement (7), se laisse déplacer en direction axiale (3) dans les deux demi-boîtiers (4, 5) en direction de la pièce à usiner (2),
- avec deux gorges de guidage linéaires (10) pratiquées dans les deux faces frontales opposées à grande surface (6') de la pièce centrale (6), qui sont orientées en croix l'une par rapport à l'autre et en biais par rapport au sens de mouvement (3') de la pièce centrale (6),
- avec deux bras de lunette extérieurs (11, 12) dont les extrémités respectives libres (14) sont logées de manière déplaçable dans respectivement une des gorges de guidage linéaires (10) de la pièce centrale (6),
- et avec un bras de lunette central (13) fixé sur la pièce centrale (6) entre les deux bras de lunette extérieurs (11, 12),
**caractérisée en ce que**
entre les deux demi-boîtiers (4, 5), il est prévu de manière axialement déplaçable respectivement deux réglettes de guidage (15) s'étendant en parallèle et à une certaine distance de l'axe longitudinal (3) des deux demi-boîtiers (4, 5), que sur chaque réglette de guidage (15), il est prévu un boulon de commande (22) saillant perpendiculairement de celle-ci et orienté vers la pièce centrale (6), que dans la pièce centrale (6), il est pratiqué une première et une deuxième piste de guidage linéaire (43, 44), qui sont écartées l'une de l'autre et orientées en parallèle avec l'axe longitudinal (3) et alignées avec respectivement un des boulons de commande (22), que dans les extrémités libres (14) de chacun des deux bras de lunette extérieurs (11, 12), il est pratiqué une courbe de commande (41, 42) alignée partiellement avec respectivement un des boulons de commande (22) et avec une des pistes de guidage (43, 44) de la pièce centrale (6), que les boulons de commande (22) s'enfoncent dans les courbes de commande (41, 42) du moment que la pièce centrale (6) est avancée en direction de la pièce à usiner (2), que, directement avant le contact des bras de lunette (11, 12, 13) avec la pièce à usiner (2), les boulons de commande (22) sur la face intérieure des courbes de commande (41, 42) entrent en contact avec la pièce à usiner (2), que les courbes de commande (41, 42) comportent une face de commande (46) s'étendant vers l'extérieur, qui permet de déplacer les bras de lunette extérieurs (11, 12) le long de la gorge de guidage linéaire (10) vers l'extérieur en vue de l'avance des bras de lunette extérieurs (11, 12) vers la pièce à usiner (2), que, moyennant une première demi-coupelle (18) à section en forme de croissant, les positions des réglettes de guidage (15) par rapport à l'écartement entre celles-ci et la pièce à usiner (2) se laissent régler de sorte que les deux bras de lunette extérieurs (11, 12) arrivent simultanément ou après le bras de lunette central (13) en contact avec la pièce à usiner (2), et que, moyennant une deuxième demi-coupelle (19) à section en forme de croissant, et partant d'une position de départ alignée, les positions des deux réglettes de guidage (15) se laissent régler en marche synchrone et contraire.

2. Lunette d'après la revendication 1,
**caractérisée en ce que**
les deux demi-coupelles (18, 19) sont arrangées en série en direction du mouvement (3') de la pièce centrale (6) et séparées l'une de l'autre par un bras de compensation (20) qui est appuyé de manière axialement déplaçable sur un des deux demi-boîtiers (4 ou 5).

3. Lunette d'après une des revendications 1 ou 2,
**caractérisée en ce que**
dans chacune des réglettes de guidage (15), il est pratiqué une courbe de guidage (16), que sur les deux extrémités libres (14) des bras de lunette (11, 12), il est prévu un boulon de guidage (21) saillant perpendiculairement de celles-ci en direction de la pièce centrale (6) et que le boulon de guidage (21) est monté de manière axialement déplaçable dans la courbe de guidage (16) de la réglette de guidage (15).

4. Lunette d'après une des revendications précédentes,
**caractérisée en ce que**
la courbe de guidage (16) est formée par une piste de guidage (16') et par un évidement (16") saillant de celle-ci, que l'évidement (16") saille sous un angle (α) d'entre 10° et 85° de la piste de guidage (16') et que l'évidement (16") s'étend essentiellement en parallèle par rapport à la courbe de commande 41 ou 42 des bras de lunette (11, 12) saillant vers l'extérieur.

5. Lunette d'après une des revendications 3 ou 4,
**caractérisée en ce que**
une des pistes de guidage (44) pratiquées dans la pièce centrale (6) comporte un espace libre (45) dans lequel se laisse déplacer le boulon de guidage (21) du bras de lunette (11).

6. Lunette d'après une des revendications précédentes,
**caractérisée en ce que**,
en état monté, la face extérieure (24) de la première demi-coupelle (18) donnant sur la pièce à usiner (2), porte sur une face de portée (25) prévue sur un des deux demi-boîtiers (4 ou 5), que les contours de la face de portée (25) correspondent à la face extérieure (24) de la demi-coupelle (18) et que la demi-coupelle (18) est logée de manière déplaçable relativement à la face de portée (25) et perpendiculairement par rapport au sens de mouvement (3') de la pièce centrale (6).

7. Lunette d'après la revendication 6,
**caractérisée en ce que**
la face intérieure (26) de la première demi-coupelle (18) opposée à la face extérieure (24) est courbée de préférence avec un rayon constant et que, en état monté, il porte sur la face intérieure (26) de la première demi-coupelle (18) un élément de compensation (27) dont la surface (28) donnant sur la première demi-coupelle (18) est adaptée au contour intérieur de la face intérieure (26) de la première demi-coupelle (18) et dont la surface opposée (29) est réalisée plane.

8. Lunette d'après la revendication 7,
**caractérisée en ce que**,
en état monté, la surface plane (29) de l'élément de compensation (27) porte sans jeu, en direction du sens de mouvement (3') de la pièce centrale (6), sur le bras de compensation (20).

9. Lunette d'après une des revendications précédentes,
**caractérisée en ce que**
la section transversale du bras de compensation (20) est réalisée en profil U, que, dans la traverse (20') du bras de compensation (20), il est pratiqué un creux à section courbée (30) dans lequel est insérée la deuxième demi-coupelle (19), et que le contour de la surface de la deuxième demi-coupelle (19) correspond au contour intérieur du creux (30) du bras de compensation (20).

10. Lunette d'après une des revendications précédentes,
**caractérisée en ce que**,
en état monté, les deux faces frontales (32) de la deuxième demi-coupelle (19) portent directement et ensemble sur respectivement une des réglettes de guidage (15), formant ainsi une face de portée (17) pour le mouvement axial des réglettes de guidage (15).

11. Lunette d'après la revendication 9,
**caractérisée en ce que**,
moyennant un ressort de pression à vis (33), les deux réglettes de guidage (15) sont pressés sur la surface de portée respective (17) de la deuxième demi-coupelle (19) et que cette force de pression a pour effet que la deuxième demi-coupelle (19) soit pressée contre le bras de compensation (20) et ce dernier contre l'élément de compensation (27) et contre la première demi-coupelle (18).

12. Lunette d'après une des revendications précédentes,
**caractérisée en ce que**
moyennant de préférence des vis (34) et des ressorts de pression à vis (35), la première et la deuxième demi-coupelle (18, 19) se laissent déplacer perpendiculairement par rapport au sens de mouvement (3') de la pièce centrale (6), en tant que force antagoniste relative aux deux demi-boîtiers (4 ou 5).
